# EUROPEAN PATENT APPLICATION

(11) **EP 4 683 301 A1**
(43) Date of publication of application: **21.01.2026**
(21) Application number: 24770020.6
(22) Date of filing: 15.03.2024
(51) Int. Cl.: H04L 61/5014, H04L 45/74

(54) **COMMUNICATION METHOD AND APPARATUS, COMMUNICATION DEVICE, AND COMPUTER STORAGE MEDIUM**

(30) Priority: 16.03.2023 CN 202310258244
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HAN, Ruibo, Beijing 100053 (CN); CHENG, Weiqiang, Beijing 100053 (CN); LI, Han, Beijing 100053 (CN); LIU, Yisong, Beijing 100053 (CN)
(74) Representative: J A Kemp LLP
(86) International application number: PCT/CN2024/081813
(87) International publication number: WO 2024/188330

(57) **Abstract**

Embodiments of the present invention disclose a communication method and an apparatus, a communication device, and a computer storage medium. The method comprises: a client device receives a first message sent by a DHCPv6 server, wherein the first message comprises first information, the first information represents network node identifier Locator information allocated for the client device, the first message comprises a first option and a second option nested in the first option, and the first option and/or the second option are/is used for carrying the first information.

## Description

### CROSS-REFERENCE TO RELATED APPLICATION

This application is based on and claims priority to Chinese patent No. 202310258244.9 filed on March 16, 2023, the contents of which are hereby incorporated by reference in by its entirety.

### TECHNICAL FIELD

The disclosure relates to the technical field of communications, and in particular to a method and apparatus for communication, a communication device, and a computer storage medium.

### BACKGROUND

At present, Dynamic Host Configuration Protocol for Internet Protocol Version 4 (DHCPv4)/Dynamic Host Configuration Protocol for Internet Protocol Version 6 (DHCPv6)/ is a technology for allocating an Internet Protocol Version 4 (IPv4)/Internet Protocol Version 6 (IPv6) address to a client. Segment routing over IPv6 (SRv6) is a Segment Routing (SR) solution extended based on IPv6. A locator address in SRv6 is an address resource completely different from an IPv4/IPv6 address, and can only be configured manually at present.

### SUMMARY

In order to solve the technical problem existing in the related art, embodiments of the disclosure provide a method and apparatus for communication, a communication device and a computer storage medium.

To achieve the above purpose, the technical solution of the embodiments of the disclosure is implemented as follows.

In a first aspect, embodiments of the disclosure provide a method for communication, applied to a client device, and including: receiving a first packet from a dynamic host configuration protocol for Internet protocol version 6 (DHCPv6) server, wherein the first packet includes first information indicating locator information allocated to the client device, the locator information representing a network node identifier; wherein the first packet includes a first option and a second option nested in the first option, and at least one of the first option or the second option is used to carry the first information.

In the above scheme, the first option includes a first field for representing a first-type code, the second option includes a second field for representing a second-type code, and the first-type code and the second-type code indicate an allocation service for the locator information; and the second option further includes a third field for carrying the locator information.

In the above scheme, the first option further includes at least one of following: a fourth field for representing an option length; a fifth field for representing an identity association (IA) identifier; a sixth field for representing a first duration in which the client device transmits a request of extending a valid lifetime of an address to a server that allocates the address to the client device; or a seventh field for representing a second duration in which the client device transmits a request of extending the valid lifetime of the address to any available server.

In the above scheme, the second option further includes at least one of following: an eighth field for representing an option length; a ninth field for representing a preferred lifetime of the locator information; a tenth field for representing a valid lifetime of a specified allocated prefix; an eleventh field for representing a length of the locator information; a twelfth field for representing a length of segment routing over Internet protocol version 6 (SRv6) related function information; a thirteenth field for representing a length of SRv6-related argument (Args) information; a fourteenth field for representing a length of a common prefix block; or a fifteenth field for representing other information.

In the above scheme, in a case of receiving first packets from multiple of DHCPv6 servers, the method further includes: selecting a first DHCPv6 server from the multiple DHCPv6 servers, and determining locator information carried in a first packet transmitted by the first DHCPv6 server as target locator information.

In the above scheme, the method further includes: transmitting a second packet including at least information of the first DHCPv6 server; and receiving a third packet from the first DHCPv6 server, wherein the third packet is used for conforming the locator information allocated to the client device; wherein at least one of the second packet or the third packet includes the first option and the second option nested in the first option.

In the above scheme, before receiving the first packet from the DHCPv6 server, the method further includes: transmitting a fourth packet for requesting the DHCPv6 server to allocate the locator information; wherein the fourth packet includes the first option and the second option nested in the first option.

In a second aspect, embodiments of the disclosure further provide a method for communication, applied to a DHCPv6 server, and including: transmitting a first packet to a client device, wherein the first packet includes first information indicating locator information allocated to the client device, the locator information representing a network node identifier; wherein the first packet includes a first option and a second option nested in the first option, and at least one of the first option or the second option is used to carry the first information.

In the above scheme, the first option includes a first field for representing a first-type code, the second option includes a second field for representing a second-type code, and the first-type code and the second-type code indicate an allocation service for the locator information; and the second option further includes a third field for carrying the locator information.

In the above scheme, the first option further includes at least one of following: a fourth field for representing an option length; a fifth field for representing an identity association (IA) identifier; a sixth field for representing a first duration in which the client device transmits a request of extending a valid lifetime of an address to a server that allocates the address to the client device; or a seventh field for representing a second duration in which the client device transmits a request of extending the valid lifetime of the address to any available server.

In the above scheme, the second option further includes at least one of following: an eighth field for representing an option length; a ninth field for representing a preferred lifetime of the locator information; a tenth field for representing a valid lifetime of a specified allocated prefix; an eleventh field for representing a length of the locator information; a twelfth field for representing a length of segment routing over Internet protocol version 6 (SRv6) related function information; a thirteenth field for representing a length of SRv6-related argument (Args) information; a fourteenth field for representing a length of a common prefix block; or a fifteenth field for representing other information.

In the above scheme, the method further includes: receiving a second packet from the client device, wherein the second packet includes at least information of a first DHCPv6 server, and the second packet includes the first option and the second option nested in the first option.

In the above scheme, in a case that the DHCPv6 server is the first DHCPv6 server, the method further includes: transmitting a third packet to the client device, wherein the third packet is used for conforming the locator information allocated to the client device; wherein the third packet includes the first option and the second option nested in the first option.

In the above scheme, the method further includes: receiving a fourth packet from the client device, wherein the fourth packet is used for requesting the DHCPv6 server to allocate the locator information; wherein the fourth packet includes the first option and the second option nested in the first option.

In a third aspect, embodiments of the disclosure further provide an apparatus for communication, applied to a client device and including: a first receiving unit, configured to receive a first packet from a dynamic host configuration protocol for Internet protocol version 6 (DHCPv6) server, wherein the first packet includes first information indicating locator information allocated to the client device; and wherein the first packet includes a first option and a second option nested in the first option, and at least one of the first option or the second option is used to carry the first information.

In a fourth aspect, embodiments of the disclosure further provide an apparatus for communication, applied to a first packet from a dynamic host configuration protocol for Internet protocol version 6 (DHCPv6) server and including: a second transmitting unit, configured to transmit a first packet to a client device, wherein the first packet includes first information indicating locator information allocated to the client device; and wherein the first packet includes a first option and a second option nested in the first option, and at least one of the first option or the second option is used to carry the first information.

In a fifth aspect, embodiments of the disclosure further provide a computer-readable storage medium having stored thereon a computer program that, when executed by a processor, causes the processor to implement the steps of the method for communication in the first aspect, or the second aspect.

In a sixth aspect, embodiments of the disclosure further provide a communication device, including a memory, a processor, and a computer program that is stored in the memory and is capable of being run on the processor. The processor executes the computer program to implement the steps of the method for communication in the first aspect, or the second aspect.

In the method and apparatus for communication, the communication device and the computer storage medium according to the embodiments of the disclosure, the method includes that a client device receives a first packet from a dynamic host configuration protocol for Internet protocol version 6 (DHCPv6) server. The first packet includes first information indicating locator information allocated to the client device. The locator information represents a network node identifier. The first packet includes a first option and a second option nested in the first option, and at least one of the first option or the second option is used to carry the first information. According to the technical solution of the embodiments of the disclosure, by defining two new options different from conventional options for allocating an IPv4 or IPv6 address, and using the new options to carry or indicate Locator information, allocation of Locator information in SRv6 is realized.

### BRIEF DESCRIPTION OF THE DRAWINGS

FIG. 1 illustrates a schematic diagram of a scenario to which the method for communication according to embodiments of the disclosure is applied.
FIG. 2 illustrates a schematic diagram of a format of an SRv6 packet according to embodiments of the disclosure.
FIG. 3 illustrates a schematic diagram of a format of a segment identifier (SID) according to embodiments of the disclosure.
FIG. 4 illustrates a first schematic flowchart of a method for communication according to embodiments of the disclosure.
FIGS. 5A and 5B illustrate schematic diagrams of formats of options in a method for communication according to embodiments of the disclosure respectively.
FIG. 6 illustrates a second schematic flowchart of a method for communication according to embodiments of the disclosure.
FIG. 7 illustrates a schematic diagram of an interaction procedure of a method for communication according to embodiments of the disclosure.
FIG. 8 illustrates a first schematic structural diagram of composition of an apparatus for communication according to embodiments of the disclosure.
FIG. 9 illustrates a second schematic structural diagram of composition of an apparatus for communication according to embodiments of the disclosure.
FIG. 10 illustrates a schematic structural diagram of hardware composition of a communication device according to embodiments of the disclosure.

### DETAILED DESCRIPTION

The disclosure is further described in detail in conjunction with the accompanying drawings and particular embodiments.

The technical solution of the embodiments of the disclosure may be applied to various communication systems, for example, a global system of mobile communication (GSM), a long term evolution (LTE) system, a 5th generation (5G) system or the like. Optionally, the 5G system or 5G network may also be referred to as a new radio (NR) system or NR network.

Exemplarily, the communication system to which the embodiments of the disclosure are applied may include a network device and a terminal device (or may be referred to as a terminal, a communication terminal or the like). The network device may be a device communicating with the terminal device. The network device can provide communication coverage for a specific area, and can communicate with the terminal within the coverage. Optionally, the network device may be a base station in various communication systems, for example an evolutional NodeB (eNB) in an LTE system, or a base station (gNB) in a 5G system or NR system.

It is to be understood that devices having a communication function in the network/system in the embodiments of the disclosure may be referred to as a communication device. The communication device may include a network device and a terminal that have a communication function. The network device and the terminal device may be particular devices described above, which will not be described herein again. The communication device may further include other devices in the communication system, for example a network controller, a mobility management entity and other network entities, which is not limited in the embodiments of the disclosure.

It is to be understood that the terms "system" and "network" herein are often used exchangeably. The term "and/or" herein merely describes a relation between associated objects, representing that three relations may exist. For example, A and/or B may represent following three cases: existence of A alone, existence of both A and B, and existence of B alone. Additionally, the character "/" generally indicates that the contextual objects are in an "or" relationship.

The terms "first", "second", etc. in the description and claims of the disclosure are used to distinguish similar objects, and do not necessarily describe a specific sequence or ranking order. It should be understood that such used terms may be interchangeable where appropriate so that the embodiments of the disclosure described herein, for example, can be implemented in an order other than those depicted or described herein. In addition, the terms "comprise/include" and "have" and any variants thereof are intended to cover non-exclusive inclusion. For example, a process, method, system, product or device containing a series of steps or units is not necessarily limited to those steps or units clearly listed, and can include other steps or units not clearly listed or inherent to the process, method, system, product or device.

Before describing the method for communication according to the embodiments of the disclosure, DHCPv6 and SRv6 are firstly briefly described.

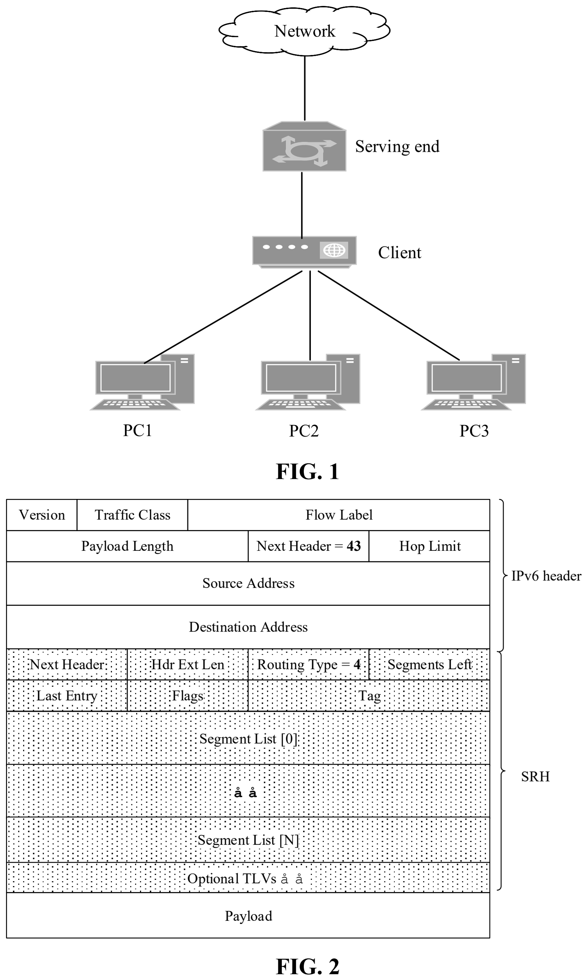

FIG. 1 illustrates a schematic diagram of a scenario to which the method for communication according to embodiments of the disclosure is applied. As illustrated in FIG. 1, a client/server communication mode is employed in DHCPv6. A client device (such as an optical modem, a client-side desktop router, an optical network unit (ONU), a router, a switch, or a client-side 4th-generation/5th-generation (4G/5G) customer premise equipment (CPE) router) can cooperate with an edge device of an operator network (i.e., a serving end) (such as a broadband remote access server (BRAS), a full-service router (SR), a public data network (PDN) gateway (P-GW), and a user plane function (UPF)) to automatically acquire an IPv6 address from the server through a DHCPv6 protocol.

FIG. 2 illustrates a schematic diagram of a format of an SRv6 packet according to embodiments of the disclosure. As illustrated in FIG. 2, an SRv6 packet includes an IPv6 header, a Segment Routing Header (SRH), and a payload. The value of a Next Header in the IPv6 header being 43 indicates that the next header is a Routing Extension Header. An SRv6 data plane may be encapsulated by a segment Routing Header (SRH). Segment list (SL) information is encapsulated in the SRH, and each segment is a 128-bit IPv6 address. An SRv6 tunnel is a management entity for a corresponding SID list, and is presented to services like other tunnels. The SRv6 tunnel can carry all known types of payloads such as Layer 2, Layer 3, Multi-Protocol Label Switching (MPLS), Transmission Control Protocol (TCP), and User Datagram Protocol (UDP).

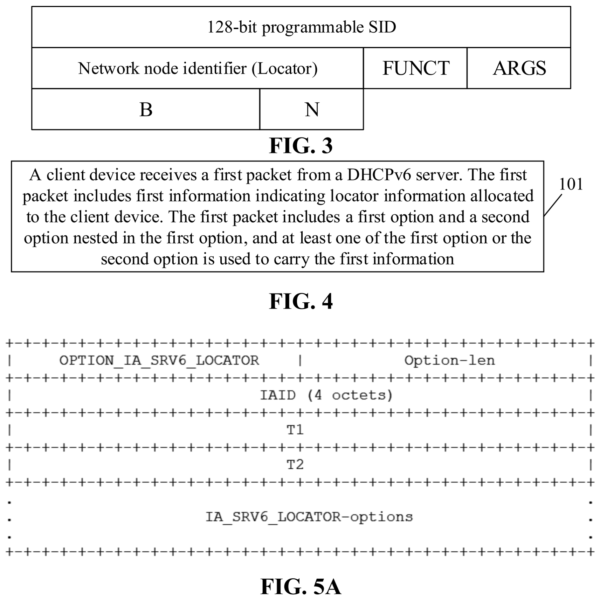

In SRv6, a SID may be understood as the Internet protocol (IP) address of a router, and a SID list represents the IP address list of an entire routing path. As illustrated in FIG. 3, an SRv6 SID may be a 128-bit programmable SID, and may include Locator, Function (FUNCT), and Arguments (ARGS). Locator has a positioning function, is a network node identifier in an SRv6 protocol system, is an identifier allocated to a network node in a network topology, and is used for forwarding a data packet to the network node. In other embodiments, Locator may also be referred to as a location identifier. The route corresponding to Locator will be issued to a network by the network node through an Interior Gateway Protocol (IGP), to help other devices forward data packets to the node network that issues the Locator. In an SRv6 SID, the length of Locator may be variable to adapt to networks of different scales. Locator may be subdivided into B and N. B identifies an SRv6 SID block, and is generally allocated to a certain subnet by the operator and is usually represented by Prefix. N is an identifier for distinguishing nodes in the subnet, namely an identifier of a node. For a SID that can be compressed, length of Locator = length of B + length of N. Function (FUNCT) is used for expressing a forwarding action to be performed, which is equivalent to an operation code of a computer instruction. In SRv6 network programming, different forwarding behaviors are described by the Function part, such as forwarding a data packet to a specified link, or performing table lookup in a specified table and forwarding. Arguments (ARGS) is an optional field, and includes parameters corresponding to execution of an instruction. These parameters may include a data flow, a service, or any other related information.

Embodiments of the disclosure provide a method for communication. FIG. 4 illustrates a first schematic flowchart of a method for communication according to embodiments of the disclosure. As illustrated in FIG. 4, the method includes operation 101.

At 101, a client device receives a first packet from a dynamic host configuration protocol for Internet protocol version 6 (DHCPv6) server. The first packet includes first information indicating locator information allocated to the client device. The first packet includes a first option and a second option nested in the first option, and at least one of the first option or the second option is used to carry the first information.

In this embodiment, the first packet includes a first option and a second option nested in the first option. By defining two new options different from conventional options for allocating an IPv4 or IPv6 address and using the new options to carry or indicate Locator information, allocation of Locator information in SRv6 is realized. The Locator information is a network node identifier segment in the SRv6 protocol system, and is mainly used to form a SID to realize corresponding route forwarding. The Locator information may include one or more Locators.

In another embodiment, the first option may also be referred to as a first option field in the first packet, and the second option may also be referred to as a second option field nested in the first option field in the first packet, or may also be referred to as a sub-option or sub-option field.

In this embodiment, the first packet may be a packet transmitted by the serving end (DHCPv6 server) to the client (DHCPv6 client) during an interaction process between the client (DHCPv6 client) and the serving end (DHCPv6 server) in the DHCPv6 protocol. In some optional embodiments, the first packet may be an advertise packet.

In this embodiment, the first information (i.e., Locator information) may be carried or indicated in the first option and/or the second option in the packet. In the following embodiment, description is made with the first information (i.e., Locator information) being carried or indicated in the second option as an example.

In some optional embodiments of the disclosure, the first option includes a first field for representing a first-type code. The second option includes a second field for representing a second-type code. The first-type code and the second-type code indicate an allocation service for the locator information. The second option further includes a third field for carrying the locator information.

In this embodiment, on the one hand, allocated Locator information is carried or indicated in a third field in a second option nested in a first option. On the other hand, the first option in the packet includes a first field for representing a first-type code, and the second option in the packet includes a second field for representing a second-type code. The first-type code and the second-type code indicate an allocation service for the locator information. In this way, when receiving the packet, a receiver can determine that the packet is related to an allocation service for the Locator information, and the DHCPv6 server can allocate the Locator information based on the packet with the newly added first option and second option (i.e., the Locator information is carried or indicated in the second option in the first packet).

In some optional embodiments of the disclosure, the first option further includes at least one of following:
a fourth field for representing an option length;
a fifth field for representing an identity association (IA) identifier;
a sixth field for representing a first duration in which the client device transmits a request of extending a valid lifetime of an address to a server that allocates the address to the client device; or
a seventh field for representing a second duration in which the client device transmits a request of extending the valid lifetime of the address to any available server.

In this embodiment, referring to FIG. 5A, the first field is, for example, an OPTION_IA_SRV6_LOCATOR field, indicating a first-type code that is newly defined or to be allocated. The fourth field is, for example, an option length (Option-len) field, indicating an option length of the first option, which is usually 12 bytes + the length of the nested second option (e.g., the IA_SRV6_LOCATOR-options field in the drawing).

The fifth field is, for example, an IA identifier (IAID) field, which is a structure that enables the DHCPv6 server and the client to recognize, group and manage a series of related IPv6 addresses. Each IA includes an IAID and associated configuration information. The identity of the IA is uniquely determined by the IAID, and duplicate IAIDs of a same client is not allowed. The IAID should not be lost or changed due to factors such as device restart.

The sixth field is, for example, a T1 field, and the seventh field is, for example, a T2 field.

In some optional embodiments of the disclosure, the second option further includes at least one of following:
an eighth field for representing an option length;
a ninth field for representing a preferred lifetime of the locator information;
a tenth field for representing a valid lifetime of a specified allocated prefix;
an eleventh field for representing a length of the locator information;
a twelfth field for representing a length of segment routing over Internet protocol version 6 (SRv6) related function information;
a thirteenth field for representing a length of SRv6-related argument (Args) information;
a fourteenth field for representing a length of a common prefix block; or
a fifteenth field for representing other information.

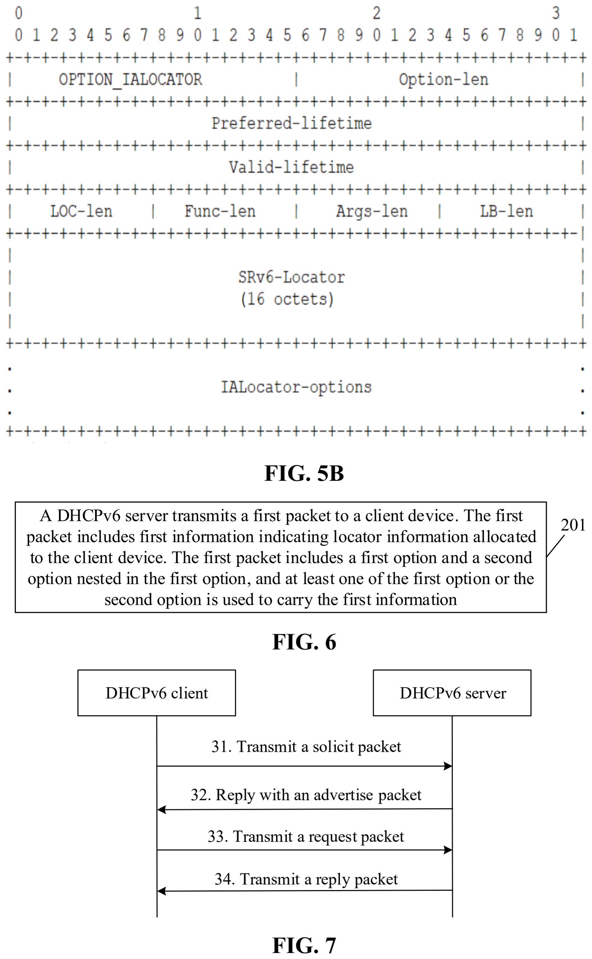

In this embodiment, the second option may further include other information related to the Locator information, such as a length of the Locator information, and a preferred lifetime of the Locator information. In another embodiment, the second option may further include other information. Referring to FIG. 5B, the second field may be, for example, an OPTION_IALOCATOR field representing a second-type code that is newly defined or to be allocated. The third field is, for example, an SRv6-Locator field for indicating or carrying the Locator information.

The eighth field may be an option length (Option-len) field indicating an option length of the second option, which is usually 28 bytes + the length of the IALocator-options field. The ninth field may be a Preferred-lifetime field, indicating a preferred lifetime of a specified allocated Locator. The tenth field may be a Valid-lifetime field, indicating a valid lifetime of a specified allocated prefix. The Valid-lifetime needs to be greater than or equal to the Preferred-lifetime.

The eleventh field may be a Locator Length (LOC-Len) field indicating the length of the Locator field.

The twelfth field may be a function length (Func-len) field indicating the length of the function (Func) field.

The thirteenth field may be an Arguments length (Args-len) field.

The fourteenth field may be a common prefix block length (LB-len) field.

The fifteenth field may be an IALocator-options field, indicating other supplementary information that needs to be carried.

In some optional embodiments of the disclosure, before receiving the first packet from the DHCPv6 server, the method further includes: a fourth packet for requesting the DHCPv6 server to allocate the locator information is transmitted. The fourth packet includes the first option and the second option nested in the first option.

In this embodiment, before receiving the first packet from the DHCPv6 server, the client device may further transmit a fourth packet to the DHCPv6 server. The fourth packet is used for requesting the DHCPv6 server to allocate the locator information. Optionally, the fourth packet may be transmitted by the client device in a multicast mode. Optionally, the fourth packet may be a solicit packet.

The fourth packet further includes a new first option and the second option nested in the first option. When the fourth packet is a solicit packet, the soliciting message has the meaning of requesting a query. Through the new first option and the second option nested in the first option included in the fourth packet, the fourth packet has the meaning of requesting allocation of Locator information.

In some optional embodiments of the disclosure, in a case of receiving first packets from multiple of DHCPv6 servers, the method further includes: a first DHCPv6 server is selected from the multiple DHCPv6 servers, and locator information carried in a first packet transmitted by the first DHCPv6 server is determined as target locator information.

In some optional embodiments, the method further includes: a second packet including at least information of the first DHCPv6 server is transmitted; and a third packet is received from the first DHCPv6 server. The third packet is used for conforming the locator information allocated to the client device. At least one of the second packet or the third packet includes the first option and the second option nested in the first option.

In this embodiment, the client device may receive first packets from multiple DHCPv6 servers. For example, in a case that the client device multicasts the fourth packet, multiple DHCPv6 servers may receive the fourth packet, and the client device may receive first packets from multiple DHCPv6 servers in this case. Further, the client device will select a first DHCPv6 server (or a target DHCPv6 server) from the multiple DHCPv6 servers. The client device selects a first DHCPv6 server from the multiple DHCPv6 servers according to a preset condition. Exemplarily, the preset condition may be a priority; that is, a server with a highest priority is selected from the multiple DHCPv6 servers as the first DHCPv6 server according to the priorities of the multiple DHCPv6 servers. Alternatively, the preset condition may be a preset selection rule, and a server is selected from the multiple DHCPv6 servers as the first DHCPv6 server according to the selection rule. No limitation is made in this embodiment.

In this embodiment, each DHCPv6 server may carry or indicate the Locator information allocated by the DHCPv6 server in a third field in the second option nested in the first option in the first packet. After selecting or determining the first DHCPv6 server, the client device determines the Locator information carried or indicated in the second option in the first packet transmitted by the first DHCPv6 server as the selected Locator information or the target Locator information.

In this embodiment, after selecting the first DHCPv6 server (or the target DHCPv6 server), the client device may transmit a second packet to the multiple DHCPv6 servers. The second packet includes at least information of the first DHCPv6 server (for example, an identifier of the first DHCPv6 server), so that all relevant DHCPv6 servers can obtain the target DHCPv6 server determined by the DHCPv6 client. Optionally, the second packet may be a request packet. Optionally, the client device may transmit the second packet (for example, a request packet) to the multiple DHCPv6 servers in a multicast mode. Further, the client device may receive a third packet from the first DHCPv6 server. The third packet is used for confirming the Locator information (or target Locator information) allocated to the client device. That is, the first DHCPv6 server transmits the third packet to confirm that the Locator information (or target Locator information) is allocated to the client device for use. Optionally, the third packet may be a reply packet.

At least one of the second packet or the third packet includes the first option and the second option nested in the first option. In a case that the second packet is a request packet and the third packet is a reply packet, the second packet and the third packet include a first option and a second option nested in the first option, so that the second packet and the third packet have the new meaning in this embodiment. Optionally, the second packet may carry the information of the selected first DHCPv6 server in a traditional option or a packet header parameter. The third packet may also carry, in a traditional option or a packet header parameter, confirmation information for confirming the Locator information allocated to the client device.

Based on the above embodiment, embodiments of the disclosure further provide a method for communication. FIG. 6 illustrates a second schematic flowchart of a method for communication according to embodiments of the disclosure. As illustrated in FIG. 6, the method includes operation 201.

At operation 201, a DHCPv6 server transmits a first packet to a client device. The first packet includes first information indicating locator information allocated to the client device. The first packet includes a first option and a second option nested in the first option, and at least one of the first option or the second option is used to carry the first information.

In this embodiment, the first packet includes a first option and a second option nested in the first option. By defining two new options different from conventional options for allocating an IPv4 or IPv6 address and using the new options to carry or indicate Locator information, allocation of Locator information in SRv6 is realized.

In some optional embodiments of the disclosure, the first option includes a first field for representing a first-type code. The second option includes a second field for representing a second-type code. The first-type code and the second-type code indicate an allocation service for the locator information. The second option further includes a third field for carrying the locator information.

In this embodiment, on the one hand, allocated Locator information is carried or indicated in a third field in a second option nested in a first option. On the other hand, the first option in the packet includes a first field for representing a first-type code, and the second option in the packet includes a second field for representing a second-type code. The first-type code and the second-type code indicate an allocation service for the locator information. In this way, when receiving the packet, a receiver can determine that the packet is related to an allocation service for the Locator information, and the DHCPv6 server can allocate the Locator information based on the packet with the newly added first option and second option (i.e., the Locator information is carried or indicated in the second option in the first packet).

In some optional embodiments of the disclosure, the first option further includes at least one of following:
a fourth field for representing an option length;
a fifth field for representing an identity association (IA) identifier;
a sixth field for representing a first duration in which the client device transmits a request of extending a valid lifetime of an address to a server that allocates the address to the client device; or
a seventh field for representing a second duration in which the client device transmits a request of extending the valid lifetime of the address to any available server.

In this embodiment, referring to FIG. 5a, the first field is, for example, an OPTION_IA_SRV6_LOCATOR field, indicating a first-type code that is newly defined or to be allocated. The fourth field is, for example, an option length (Option-len) field, indicating an option length of the first option, which is usually 12 bytes + the length of the nested second option (e.g., the IA_SRV6_LOCATOR-options in the drawing).

The fifth field is, for example, an IA identifier (IAID) field, which is a structure that enables the DHCPv6 server and the client to recognize, group and manage a series of related IPv6 addresses. Each IA includes an IAID and associated configuration information. The identity of the IA is uniquely determined by the IAID, and duplicate IAIDs of a same client is not allowed. The IAID should not be lost or changed due to factors such as device restart.

The sixth field is, for example, a T1 field, and the seventh field is, for example, a T2 field.

In some optional embodiments of the disclosure, the second option further includes at least one of following:
an eighth field for representing an option length;
a ninth field for representing a preferred lifetime of the locator information;
a tenth field for representing a valid lifetime of a specified allocated prefix;
an eleventh field for representing a length of the locator information;
a twelfth field for representing a length of segment routing over Internet protocol version 6 (SRv6) related function information;
a thirteenth field for representing a length of SRv6-related argument (Args) information;
a fourteenth field for representing a length of a common prefix block; or
a fifteenth field for representing other information.

In this embodiment, the second option may further include other information related to the Locator information, such as a length of the Locator information, and a preferred lifetime of the Locator information. In other embodiments, the second option may further include other information. Referring to FIG. 5B, the second field may be, for example, an OPTION_IALOCATOR field representing a second-type code that is newly defined or to be allocated. The third field is, for example, an SRv6-Locator field for indicating or carrying the Locator information.

The eighth field may be an option length (Option-len) field indicating an option length of the second option, which is usually 28 bytes + the length of the IALocator-options field. The ninth field may be a Preferred-lifetime field, indicating a preferred lifetime of a specified allocated Locator. The tenth field may be a Valid-lifetime field, indicating a valid lifetime of a specified allocated prefix. The Valid-lifetime needs to be greater than or equal to the Preferred-lifetime.

The eleventh field may be a Locator Length (LOC-Len) field indicating the length of the Locator field.

The twelfth field may be a function length (Func-len) field indicating the length of the function (Func) field.

The thirteenth field may be an Arguments length (Args-len) field.

The fourteenth field may be a common prefix block length (LB-len) field.

The fifteenth field may be an IALocator-options field, indicating other supplementary information that needs to be carried.

In some optional embodiments of the disclosure, the method further includes: a second packet is received from the client device. The second packet includes at least information of a first DHCPv6 server, and the second packet includes the first option and the second option nested in the first option.

In some optional embodiments, in a case that the DHCPv6 server is the first DHCPv6 server, the method further includes: a third packet is transmitted to the client device. The third packet is used for conforming the locator information allocated to the client device. The third packet includes the first option and the second option nested in the first option.

In this embodiment, after selecting the first DHCPv6 server (or the target DHCPv6 server), the client device may transmit a second packet to the multiple DHCPv6 servers. The second packet includes at least information of the first DHCPv6 server (for example, an identifier of the first DHCPv6 server), so that all relevant DHCPv6 servers can obtain the target DHCPv6 server determined by the DHCPv6 client. Optionally, the second packet may be a request packet. Optionally, the client device may transmit the second packet (for example, a request packet) to the multiple DHCPv6 servers in a multicast mode. Further, in a case that the DHCPv6 server is the first DHCPv6 server, that is, the DHCPv6 server is the target server selected by the client device, the DHCPv6 server transmits a third packet to the client device. The third packet is used for confirming the Locator information (or target Locator information) allocated to the client device. That is, the first DHCPv6 server transmits the third packet to confirm that the Locator information (or target Locator information) is allocated to the client device for use. Optionally, the third packet may be a reply packet.

At least one of the second packet or the third packet includes the first option and the second option nested in the first option. In a case that the second packet is a request packet and the third packet is a reply packet, the second packet and the third packet include a first option and a second option nested in the first option, so that the second packet and the third packet have the new meaning in this embodiment. Optionally, the second packet may carry the information of the selected first DHCPv6 server in a traditional option or a packet header parameter. The third packet may also carry, in a traditional option or a packet header parameter, confirmation information for confirming the Locator information allocated to the client device.

In some optional embodiments of the disclosure, the method further includes: a fourth packet is received from the client device. The fourth packet is used for requesting the DHCPv6 server to allocate the locator information; The fourth packet includes the first option and the second option nested in the first option.

In this embodiment, before the DHCPv6 server transmits the first packet to the client device, the client device may transmit a fourth packet to the DHCPv6 server. The fourth packet is used for requesting the DHCPv6 server to allocate the locator information. Optionally, the fourth packet may be transmitted by the client device in a multicast mode. Optionally, the fourth packet may be a solicit packet.

The fourth packet further includes a new first option and the second option nested in the first option. When the fourth packet is a solicit packet, the soliciting message has the meaning of requesting a query. Through the new first option and the second option nested in the first option included in the fourth packet, the fourth packet has the meaning of requesting allocation of Locator information.

The method for communication according to the embodiments of the disclosure is described in detail hereinafter in conjunction with a particular example.

FIG. 7 illustrates a schematic diagram of an interaction procedure of a method for communication according to embodiments of the disclosure. As illustrated in FIG. 7, the method may include operations 31 to 34.

At operation 31, a DHCPv6 client transmits a solicit packet to multiple DHCPv6 servers in a multicast mode, for requesting the DHCPv6 servers to allocate Locator information to the DHCPv6 client.

The solicit packet carries a first option and a second option nested in the first option.

At operation 32: the DHCPv6 servers reply the DHCPv6 client with advertise packets, for indicating Locator information allocated to the DHCPv6 client and other required configuration parameters.

The advertise packet carries a first option and a second option nested in the first option, and the allocated Locator information is indicated in a third field in the second option (such as the SRv6-Locator field in FIG. 5B).

At operation 33, the DHCPv6 client selects a server with a highest priority as a first DHCPv6 server, and transmits a request packet indicating an identifier (ID) of the first DHCPv6 server to all related DHCPv6 servers in the multicast mode.

The request message carries the first option and the second option nested in the first option.

At operation 34, the first DHCPv6 server transmits a reply packet to the DHCPv6 client, for determining that the target Locator information and other required network configuration parameters are allocated to the DHCPv6 client for use.

The reply packet carries the first option and the second option nested in the first option.

In this way, request and allocation of an SRv6 Locator can be realized through the above DHCPv6 protocol interaction process.

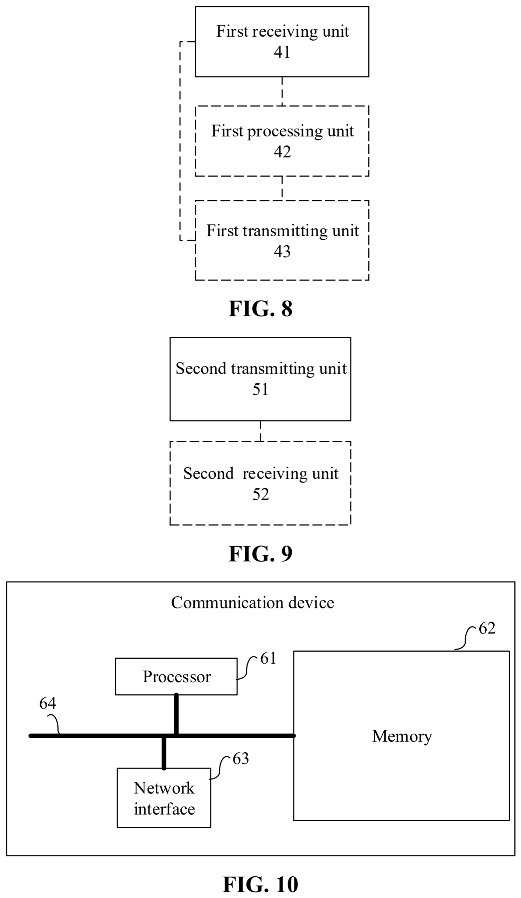

Based on the above embodiments, embodiments of the disclosure further provide an apparatus for communication. The apparatus is applied to a client device. FIG. 8 illustrates a first schematic structural diagram of composition of an apparatus for communication according to embodiments of the disclosure. As illustrated in FIG. 8, the apparatus includes a first receiving unit 41. The first receiving unit 41 is configured to receive a first packet from a dynamic host configuration protocol for Internet protocol version 6 (DHCPv6) server. The first packet includes first information indicating locator information allocated to the client device.

The first packet includes a first option and a second option nested in the first option, and at least one of the first option or the second option is used to carry the first information.

In some optional embodiments of the disclosure, the first option includes a first field for representing a first-type code. The second option includes a second field for representing a second-type code. The first-type code and the second-type code indicate an allocation service for the locator information.

The second option further includes a third field for carrying the locator information.

In some optional embodiments of the disclosure, the first option further includes at least one of following:
a fourth field for representing an option length;
a fifth field for representing an identity association (IA) identifier;
a sixth field for representing a first duration in which the client device transmits a request of extending a valid lifetime of an address to a server that allocates the address to the client device; or
a seventh field for representing a second duration in which the client device transmits a request of extending the valid lifetime of the address to any available server.

In some optional embodiments of the disclosure, the second option further includes at least one of following:
an eighth field for representing an option length;
a ninth field for representing a preferred lifetime of the locator information;
a tenth field for representing a valid lifetime of a specified allocated prefix;
an eleventh field for representing a length of the locator information;
a twelfth field for representing a length of segment routing over Internet protocol version 6 (SRv6) related function information;
a thirteenth field for representing a length of SRv6-related argument (Args) information;
a fourteenth field for representing a length of a common prefix block; or
a fifteenth field for representing other information.

In some optional embodiments of the disclosure, the apparatus further includes a first processing unit 42.

The first processing unit 42 is configured to: in a case that the first receiving unit 41 receives first packets from multiple of DHCPv6 servers, select a first DHCPv6 server from the multiple DHCPv6 servers, and determine locator information carried in a first packet transmitted by the first DHCPv6 server as target locator information.

In some optional embodiments of the disclosure, the apparatus further includes a first transmitting unit 43. The first transmitting unit 43 is configured to transmit a second packet including at least information of the first DHCPv6 server.

The first receiving unit 41 is further configured to receive a third packet from the first DHCPv6 server. The third packet is used for conforming the locator information allocated to the client device.

At least one of the second packet or the third packet includes the first option and the second option nested in the first option.

In some optional embodiments of the disclosure, the apparatus further includes a first transmitting unit 43. The first transmitting unit 43 is configured to: transmit a fourth packet for requesting the DHCPv6 server to allocate the locator information, before the first receiving unit 41 receives the first packet from the DHCPv6 server. The fourth packet includes the first option and the second option nested in the first option.

In the embodiments of the disclosure, the first processing unit 42 in the apparatus may be realized by a central processing unit (CPU), a digital signal processor (DSP), a microcontroller unit (MCU) or a field programmable gate array (FPGA) in practical applications. The first transmitting unit 43 and the first receiving unit 41 in the apparatus may be realized by a communication module (containing such as a basic communication suite, an operating system, a communication module, a standardized interface and protocols) and a transceiving antenna in practical applications.

Embodiments of the disclosure further provide an apparatus for communication. The apparatus is applied a DHCPv6. FIG. 9 illustrates a second schematic structural diagram of composition of an apparatus for communication according to embodiments of the disclosure. As illustrated in FIG. 9, the apparatus includes a second transmitting unit 51. The second transmitting unit 51 is configured to transmit a first packet to a client device. The first packet includes first information indicating locator information allocated to the client device.

The first packet includes a first option and a second option nested in the first option, and at least one of the first option or the second option is used to carry the first information.

In some optional embodiments of the disclosure, the first option includes a first field for representing a first-type code. The second option includes a second field for representing a second-type code. The first-type code and the second-type code indicate an allocation service for the locator information.

The second option further includes a third field for carrying the locator information.

In some optional embodiments of the disclosure, the first option further includes at least one of following:
a fourth field for representing an option length;
a fifth field for representing an identity association (IA) identifier;
a sixth field for representing a first duration in which the client device transmits a request of extending a valid lifetime of an address to a server that allocates the address to the client device; or
a seventh field for representing a second duration in which the client device transmits a request of extending the valid lifetime of the address to any available server.

In some optional embodiments of the disclosure, the second option further includes at least one of following:
an eighth field for representing an option length;
a ninth field for representing a preferred lifetime of the locator information;
a tenth field for representing a valid lifetime of a specified allocated prefix;
an eleventh field for representing a length of the locator information;
a twelfth field for representing a length of segment routing over Internet protocol version 6 (SRv6) related function information;
a thirteenth field for representing a length of SRv6-related argument (Args) information;
a fourteenth field for representing a length of a common prefix block; or
a fifteenth field for representing other information.

In some optional embodiments of the disclosure, the apparatus further includes a second receiving unit 52. The second receiving unit 52 is configured to receive a second packet from the client device. The second packet includes at least information of a first DHCPv6 server, and the second packet includes the first option and the second option nested in the first option.

In some optional embodiments of the disclosure, the second transmitting unit 51 is configured to: transmit a third packet to the client device, in a case that the DHCPv6 server is the first DHCPv6 server. The third packet is used for conforming the locator information allocated to the client device. The third packet includes the first option and the second option nested in the first option.

In some optional embodiments of the disclosure, the apparatus further includes a second receiving unit 52. The second receiving unit 52 is configured to receive a fourth packet from the client device. The fourth packet is used for requesting the DHCPv6 server to allocate the locator information; The fourth packet includes the first option and the second option nested in the first option.

In the embodiments of the disclosure, the second transmitting unit 51 and the second receiving unit 52 in the apparatus may be realized by a communication module (containing such as a basic communication suite, an operating system, a communication module, a standardized interface and protocols) and a transceiving antenna in practical applications.

It is to be noted that for the above apparatus for communication according to the embodiments, the division of the program modules above is used as an example for description of the communication only. In practical applications, the processing may be allocated to and accomplished by different program modules according to demands. Namely, the inner structure of the apparatus may be divided into different program modules to accomplish all or part of the processing described above. Additionally, the above apparatus for communication according to the embodiments belong to the same concept as the method for communication, and details of the particular implementation process of the apparatus may refer to the method embodiments, which will not be described here again.

Embodiments of the disclosure further provide a communication device. The communication device may be the client device or the DHCPv6 server in above embodiments. FIG. 10 illustrates a schematic structural diagram of hardware composition of a communication device according to embodiments of the disclosure. As illustrated in FIG. 10, the communication device includes a memory 62, a processor 61, and a computer program that is stored in the memory 62 and is capable of being run on the processor 61. The processor 61 executes the computer program to implement the steps of the method for communication applied to a client device or a DHCPv6 server.

Optionally, the communication device further includes at least one network interface 63. The components in the communication device are coupled together through a bus system 64. It may be understood that the bus system 64 is used for realizing the connection and communication between the components. Besides a data bus, the bus system 64 further includes a power bus, a control bus and a state signal bus. However, for clarity of description, the buses are all signed as the bus system 64 in FIG. 10.

It may be understood that the memory 62 may be a volatile memory or a non-volatile memory, or may include both a volatile memory and a non-volatile memory. The non-volatile memory may be a Read Only Memory (ROM), a Programmable Read-Only Memory (PROM), an Erasable Programmable Read-Only Memory (EPROM) an Electrically Erasable Programmable Read-Only Memory (EEPROM), a Ferromagnetic Random Access Memory (FRAM), a Flash Memory, a magnetic surface memory, an optical disc, or a compact disk read only memory (CD-ROM), or may be a device containing one or a combination of those memories. The magnetic surface memory may be a hard disk memory or a tape memory. The volatile memory may be a random access memory (RAM), that is used as an external cache. By way of example but not limiting, many forms of RAMs are usable, for example a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory 62 described in the embodiments of the disclosure is intended to include but not limited to memories of these and any other suitable types.

The method disclosed in above embodiments of the disclosure may be applied to the processor 61, or may be implemented by the processor 61. The processor 61 may be an integrated circuit chip, and has the capability of signal processing. During implementation, the various steps of in the above method may be completed by an integrated logic circuit in hardware form or instructions in software form in the processor 61. The above processor 61 may be a general-purpose processor, a digital signal processor (DSP), or other programmable logic devices, discrete gates or transistor logic devices, discrete hardware components and so on. The processor 61 may implement or perform the various methods, steps or logic blocks disclosed in the embodiments of the disclosure. The universal processor may be a microprocessor or any conventional processor and the like. The steps of the methods disclosed in combination with the embodiments of the disclosure may be directly embodied as being performed and completed by a hardware decoding processor, or being performed and completed by a combination of hardware and software modules in a decoding processor. The soft modules may be located in a storage medium. The storage medium is in the memory 62, and the processor 61 reads information from the memory 62 to implement steps of the above methods in combination with the hardware.

In an exemplary embodiment, the communication device may be implemented by one or more Application Specific Integrated Circuit (ASICs), DSPs, Programmable Logic Devices (PLDs), Complex Programmable Logic Devices (CPLDs), FPGAs, general-purpose processors, controllers, MCUs, Microprocessors, or other electronic elements, to execute the method above.

In an exemplary embodiment, embodiments of the disclosure further provide a computer-readable storage medium, for example the memory 62 including a computer program. The computer program may be executed by the processor 61 of the communication device, to accomplish the steps of the above method. The computer-readable storage medium may be such as a ferroelectric random access memory (FRAM), a read-only memory (ROM), a programmable read-only memory (PROM), an electrically programmable read-only memory (EPROM), an electrically erasable programmable read-only memory (EEPROM), a flash drive, a magnetic surface memory, an optical disc, or a compact disk read only memory (CD-ROM), or may be a device containing one or a combination of those memories.

The computer-readable storage medium according to the embodiments of the disclosure has stores thereon a computer program. The computer program, when executed by a processor, implement the steps of the method for communication applied to a client device or a DHCPv6 server.

The methods disclosed in the method embodiments according to the disclosure may be arbitrarily without conflict, to obtain a new method embodiment.

The features disclosed in the product embodiments according to the disclosure may be arbitrarily without conflict, to obtain a new product embodiment.

The features disclosed in the method embodiments or device embodiments according to the disclosure may be arbitrarily without conflict, to obtain a new method embodiment or a new device embodiment.

In some embodiments provided in the disclosure, it is to be understood that the disclosed device and method may be implemented in other ways. The device embodiments described above are only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of the embodiments according to actual requirements.

Additionally, various functional units in the embodiments of the disclosure may be all integrated in one processing unit, or may exist separately physically; or two or more units may be integrated in one unit. The integrated unit may be implemented in form of hardware, or may be implemented in form of hardware plus software functions.

Those of ordinary skill in the art may understand that all or some steps of the above method embodiment may be accomplished by hardware related to program instructions. The program described above may be stored in a computer-readable storage medium, and the program, when executed, implements the steps of the method embodiments. The foregoing storage medium includes various media capable of storage program codes such as a mobile hard disk drive, a read-only memory (ROM), a random access memory (RAM), a magnetic disc, or a compact disc (CD).

Alternatively, if implemented in form of software functional units and sold or used as independent product, the above integrated unit of the disclosure may also be stored in a computer-readable storage medium. Based on such understanding, the technical solution of the embodiments of the disclosure substantially or in part making contributions to the related art may be embodied in a software product. The computer software product is stored in a storage medium, and includes several instructions to enable a computer device (which may be a personal computer, a server, a network device or the like) to perform all or some of the method according to various embodiments of the disclosure. The foregoing storage medium includes various media capable of storage program codes such as a mobile hard disk drive, a read-only memory (ROM), a random access memory (RAM), a magnetic disc, or a compact disc (CD).

Stated above is merely detailed description of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be subjected to the claimed scope of the claims.

## Claims

1. A method for communication, applied to a client device and comprising:
receiving a first packet from a dynamic host configuration protocol for Internet protocol version 6 (DHCPv6) server, wherein the first packet comprises first information indicating locator information allocated to the client device, the locator information representing a network node identifier; and
wherein the first packet comprises a first option and a second option nested in the first option, and at least one of the first option or the second option is used to carry the first information.

2. The method of claim 1, wherein the first option comprises a first field for representing a first-type code, the second option comprises a second field for representing a second-type code, and the first-type code and the second-type code indicate an allocation service for the locator information; and
the second option further comprises a third field for carrying the locator information.

3. The method of claim 2, wherein the first option further comprises at least one of following:
a fourth field for representing an option length;
a fifth field for representing an identity association (IA) identifier;
a sixth field for representing a first duration in which the client device transmits a request of extending a valid lifetime of an address to a server that allocates the address to the client device; or
a seventh field for representing a second duration in which the client device transmits a request of extending the valid lifetime of the address to any available server.

4. The method of claim 2, wherein the second option further comprises at least one of following:
an eighth field for representing an option length;
a ninth field for representing a preferred lifetime of the locator information;
a tenth field for representing a valid lifetime of a specified allocated prefix;
an eleventh field for representing a length of the locator information;
a twelfth field for representing a length of segment routing over Internet protocol version 6 (SRv6) related function information;
a thirteenth field for representing a length of SRv6-related argument (Args) information;
a fourteenth field for representing a length of a common prefix block; or
a fifteenth field for representing other information.

5. The method of any one of claims 1 to 4, wherein in a case of receiving first packets from a plurality of DHCPv6 servers, the method further comprises:
selecting a first DHCPv6 server from the plurality of DHCPv6 servers, and determining locator information carried in a first packet transmitted by the first DHCPv6 server as target locator information.

6. The method of claim 5, further comprising:
transmitting a second packet comprising at least information of the first DHCPv6 server; and
receiving a third packet from the first DHCPv6 server, wherein the third packet is used for conforming the locator information allocated to the client device;
wherein at least one of the second packet or the third packet comprises the first option and the second option nested in the first option.

7. The method of any one of claims 1 to 6, wherein before receiving the first packet from the DHCPv6 server, the method further comprises:
transmitting a fourth packet for requesting the DHCPv6 server to allocate the locator information;
wherein the fourth packet comprises the first option and the second option nested in the first option.

8. A method for communication, applied to a dynamic host configuration protocol for Internet protocol version 6 (DHCPv6) server and comprising:
transmitting a first packet to a client device, wherein the first packet comprises first information indicating locator information allocated to the client device, the locator information representing a network node identifier;
wherein the first packet comprises a first option and a second option nested in the first option, and at least one of the first option or the second option is used to carry the first information.

9. The method of claim 8, wherein the first option comprises a first field for representing a first-type code, the second option comprises a second field for representing a second-type code, and the first-type code and the second-type code indicate an allocation service for the locator information; and
the second option further comprises a third field for carrying the locator information.

10. The method of claim 9, wherein the first option further comprises at least one of following:
a fourth field for representing an option length;
a fifth field for representing an identity association (IA) identifier;
a sixth field for representing a first duration in which the client device transmits a request of extending a valid lifetime of an address to a server that allocates the address to the client device; or
a seventh field for representing a second duration in which the client device transmits a request of extending the valid lifetime of the address to any available server.

11. The method of claim 9, wherein the second option further comprises at least one of following:
an eighth field for representing an option length;
a ninth field for representing a preferred lifetime of the locator information;
a tenth field for representing a valid lifetime of a specified allocated prefix;
an eleventh field for representing a length of the locator information;
a twelfth field for representing a length of segment routing over Internet protocol version 6 (SRv6) related function information;
a thirteenth field for representing a length of SRv6-related argument (Args) information;
a fourteenth field for representing a length of a common prefix block; or
a fifteenth field for representing other information.

12. The method of any one of claims 8 to 11, further comprising:
receiving a second packet from the client device, wherein the second packet comprises at least information of a first DHCPv6 server, and the second packet comprises the first option and the second option nested in the first option.

13. The method of claim 12, wherein in a case that the DHCPv6 server is the first DHCPv6 server, the method further comprises:
transmitting a third packet to the client device, wherein the third packet is used for conforming the locator information allocated to the client device;
wherein the third packet comprises the first option and the second option nested in the first option.

14. The method of any one of claims 8 to 13, further comprising:
receiving a fourth packet from the client device, wherein the fourth packet is used for requesting the DHCPv6 server to allocate the locator information;
wherein the fourth packet comprises the first option and the second option nested in the first option.

15. An apparatus for communication, applied to a client device and comprising: a first receiving unit, configured to receive a first packet from a dynamic host configuration protocol for Internet protocol version 6 (DHCPv6) server, wherein the first packet comprises first information indicating locator information allocated to the client device;
wherein the first packet comprises a first option and a second option nested in the first option, and tat least one of the first option or the second option is used to carry the first information.

16. An apparatus for communication, applied to a first packet from a dynamic host configuration protocol for Internet protocol version 6 (DHCPv6) server and comprising: a second transmitting unit, configured to transmit a first packet to a client device, wherein the first packet comprises first information indicating locator information allocated to the client device;
wherein the first packet comprises a first option and a second option nested in the first option, and at least one of the first option or the second option is used to carry the first information.

17. A computer-readable storage medium stored with a computer program, wherein the computer program, when executed by a processor, implements the steps of the method of any one of claims 1 to 7; or
the computer program, when executed by the processor, implements the steps of the method of any one of claims 8 to 14.

18. A communication device, comprising a memory, a processor, and a computer program that is stored in the memory and is capable of being run on the processor, wherein processor is configured to execute the computer program to implement the steps of the method of any one of claims 1 to 7; or
the processor is configured to execute the computer program to implement the steps of the method of any one of claims 8 to 14.
